# FASCICULE DE BREVET EUROPEEN

(11) **EP 4 037 111 B1**
(45) Date de publication et mention de la délivrance du brevet: **26.07.2023**
(21) Numéro de dépôt: 21153880.6
(22) Date de dépôt: 27.01.2021
(51) Int. Cl.: H01R 24/78, H01R 27/00, H01R 31/06, H01R 13/24, H01R 103/00, H02G 3/16, H02G 3/12

(54) **SYSTEME DE CONNEXION ELECTRIQUE ET DISPOSITIF DE CONNEXION ELECTRIQUE**
SYSTEM FÜR DEN STROMANSCHLUSS UND VORRICHTUNG FÜR DEN STROMANSCHLUSS
ELECTRICAL CONNECTION SYSTEM AND ELECTRICAL CONNECTION DEVICE

(43) Date de publication de la demande: 03.08.2022
(73) Titulaire: Gavino, Denis, 95480 Pierrelaye (FR)
(72) Inventeur: Gavino, Denis, 95480 Pierrelaye (FR)
(74) Mandataire: Demulsant, Xavier

(56) Documents cités:
- EP-A1- 3 605 749
- WO-A1-2005/112204
- WO-A1-2017/017339
- WO-A1-2019/179302

## Description

L'invention a trait au domaine des systèmes de connexion électriques, en particulier des dispositifs de connexion destinés à être encastrés. Un système de connexion électrique comprend classiquement une boite d'encastrement et un dispositif de connexion électrique, également dénommé enceinte.

La boite d'encastrement forme un réceptacle relié au réseau électrique général destiné à recevoir le dispositif de connexion électrique. Souvent, une telle boite d'encastrement est fixée sur un support, comme un mur ou une cloison.

Le dispositif de connexion électrique est généralement muni d'un boitier et d'un manchon. Le manchon est destiné à être électriquement et mécaniquement relié au boîtier, par branchement du manchon au sein d'une cavité agencée au sein du boitier. Un tel manchon fournit une fonction au choix de l'utilisateur. De manière connue, le manchon présente une fonction de prise de courant, d'interrupteur, de dispositif adaptateur de courant porteur en ligne, ou de détection de fumée ou tout autres types de fonctions gérées électroniquement, mécaniquement physiquement ou à distance.

La liaison mécanique et électrique entre le manchon et le boitier est démontable sans outil, permettant un changement facile du manchon selon la fonction que décide de choisir l'utilisateur.

Un tel dispositif est par exemple décrit dans les WO 2005/112204 (GAVINO), ou WO 2011/121231 A1 (GAVINO).

Le document EP 3 605 749 A1 divulgue le préambule de la revendication indépendante 1.

Malgré leur simplicité d'utilisation, les dispositifs de connexion connus et décrits ci-dessus présentent des inconvénients.

La taille et la forme de tels dispositifs empêche l'insertion de tels dispositifs dans des boites d'encastrement déjà existantes dans le commerce, et nécessite d'utiliser des boites d'encastrement spécialement conçues pour un effectuer une telle insertion.

Par ailleurs, la réalisation de la connexion entre le boitier du dispositif de connexion électrique et le réseau électrique s'effectue en introduisant le boitier au sein du réceptacle défini par la boite d'encastrement. Une connexion est ensuite réalisée entre les câbles dénudés du réseau, à savoir phase, neutre et terre, et des bornes agencées au sein de la cavité du boitier.

Une telle connexion n'est pas aisément réalisable. En effet, chaque câble doit traverser le boitier au sein d'un orifice, la partie dénudée du câble devant ensuite être insérée au sein de trous prévus sur la borne, un serrage par vis permettant de maintenir le câble inséré au sein du trou de la borne.

Une telle connexion nécessite de la part de l'utilisateur de faire preuve d'une certaine précision dans l'exécution des mouvements, lors de l'installation du boitier au sein de la boite d'encastrement.

Par ailleurs, l'insertion de câbles issus du réseau électrique, en particulier s'ils sont rigides, n'est pas facilement réalisable.

La mise en place de tels boitiers engendre ainsi une perte de temps importante pour les techniciens spécialisés dans l'installation de câbles.

Les documents FR 3039718 (Legrand) et FR 3000312 (Legrand) décrivent des ensembles d'appareillage aptes à être rapportés dans une paroi murale.

De tels ensembles d'appareillages présentent des boites comportant des bornes extérieures du boitier, les bornes étant sensiblement alignées et juxtaposées entre elles. Une telle disposition des bornes peut avoir pour conséquence de complexifier le raccordement du boitier. Par ailleurs, les câbles sont rapprochés les uns des autres, nécessitant une grande précision dans les gestes. Enfin, le décrochage accidentel d'un câble peut avoir pour conséquence éventuelle de favoriser la survenue d'un court-circuit, du fait de la proximité des câbles réseaux.

Par ailleurs, les boitiers d'encastrement décrits dans ces documents de l'art antérieur sont munis de moyens d'accrochage au support se présentant sous la forme de pattes de flexion par encliquetage. Cependant, de telles pattes offrent une résistance à l'arrachement limitée, ce qui nuit à la sûreté de manipulation du dispositif de connexion électrique, et du système de connexion.

L'invention vise à remédier aux inconvénients précités.

Un premier objet de l'invention est de proposer un dispositif de connexion électrique simple, rapide d'installation et aisément connectable au réseau électrique.

Un deuxième objet de l'invention est de proposer un dispositif de connexion électrique qui soit d'utilisation sûre.

Un troisième objet de l'invention est de proposer un système de connexion comprenant un dispositif de connexion tel que présenté ci-dessus.

Un quatrième objet de l'invention est de proposer un système de connexion présentant une résistance accrue à l'arrachement.

A cet effet, il est proposé, en premier lieu, un dispositif de connexion électrique destiné à être raccordé au réseau électrique par l'intermédiaire d'une boite d'encastrement, le dispositif de connexion comprenant: un boitier comprenant un fond, une face latérale, et une ouverture définissant ensemble un espace de réception, le boitier étant muni de moyens de connexion électriques, un manchon apte à être inséré dans l'espace de réception, les moyens de connexion électrique comprenant chacun un connecteur apte à permettre la réalisation d'une connexion au réseau électrique, et une borne permettant de réaliser une connexion avec le manchon, les bornes s'étendant au sein de l'espace de réception, chacun des connecteurs et des bornes étant électriquement reliés, les connecteurs faisant saillie du fond en s'étendant dans une direction opposée à la borne par rapport au fond.

Un tel dispositif offre l'avantage d'être facilement et rapidement mis en place au sein d'une boite d'encastrement.

Diverses caractéristiques supplémentaires peuvent être prévues, seules ou en combinaison :
- plusieurs connecteurs définissent ensemble une forme polygonale ;
- le fond comprend une première paroi de fond et deuxième paroi de fond, la première paroi de fond et la deuxième paroi de fond étant en décalage longitudinal l'une par rapport à l'autre, de sorte que la première paroi de fond soit disposée à une distance moins importante de l'ouverture que la deuxième paroi de fond, les connecteurs faisant saillie de la deuxième paroi de fond ;
- la deuxième paroi de fond est entourée d'une paroi de côté, de sorte à former un compartiment apte à recevoir le manchon, une borne s'étendant au sein du compartiment, un connecteur étant au contact de la paroi de côté ;
- un connecteur comprend un bloc muni d'une mâchoire reliée à un moyen de rappel, et une borne est une plaquette munie d'une lame déformable.

Il est proposé, en deuxième lieu, un système de connexion électrique comprenant un dispositif de connexion électrique tel que présenté ci-dessus, une boite d'encastrement, apte à être fixée sur un élément mural par l'intermédiaire d'un moyen de rattachement, la boite d'encastrement présentant un creux, le dispositif de connexion étant apte à être inséré et maintenu en position au sein du creux.

Diverses caractéristiques supplémentaires peuvent être prévues, seules ou en combinaison :
- un moyen de rattachement est déformable par compression ;
- un moyen de rattachement comprend une lamelle déformable, apte à se fléchir par une action de compression exercée par le serrage d'une vis sans fin ;
- la lamelle comprend une première fraction extrême et une deuxième fraction extrême, toute les deux étant reliées par une fraction centrale, la lamelle étant munie d'une fente, la première fraction extrême et la deuxième fraction extrême sont solidaires de la boite d'encastrement, les fractions extrêmes étant chacune munies d'un trou permettant le passage de la vis sans fin ;
- le boitier présente un col muni d'une rainure d'une hauteur prédéterminée, définissant une trajectoire circulaire, une perforation de diamètre supérieur à la hauteur de la rainure, de sorte à permettre le passage d'une vis sans fin destinée à s'introduire dans un filetage prévu au sein la boite d'encastrement ;
- le col peut recevoir en sous-face un joint type silicone permettant quand ce dernier est sous pression, par exemple par vissage, de donner une parfaite étanchéité à l'air au système. Ce joint permettra au boîtier de répondre facilement aux nouvelles normes thermiques 2012-2020.

D'autres caractéristiques et avantages de l'invention apparaîtront plus clairement et de manière concrète à la lecture de la description ci-après de modes de réalisation, laquelle est faite en référence aux dessins annexés dans lesquels :
- [Fig. 1] représente une vue schématique en perspective éclatée d'un système de connexion, le boitier étant réalisé selon un premier mode de réalisation,
- [Fig. 2] représente une vue schématique avant d'un boitier,
- [Fig. 3] représente une vue schématique arrière d'un boitier,
- [Fig. 4] représente une vue schématique en coupe d'un boitier selon le plan de coupe IV-IV de la figure 3, avec en médaillon une vue de détail,
- [Fig. 5] représente une vue schématique en perspective d'un système de connexion électrique en cours de montage,
- [Fig. 6] représente une vue schématique en perspective d'un système de connexion électrique en cours de montage,
- [Fig. 7] représente une vue schématique en perspective d'un système de connexion électrique en cours de montage,
- [Fig. 8] représente une vue schématique en perspective d'un système de connexion électrique en cours de montage,
- [Fig. 9] représente une vue schématique en perspective éclaté d'un système de connexion, le boitier étant réalisé selon un deuxième mode de réalisation, avec en médaillon une vue de détail.

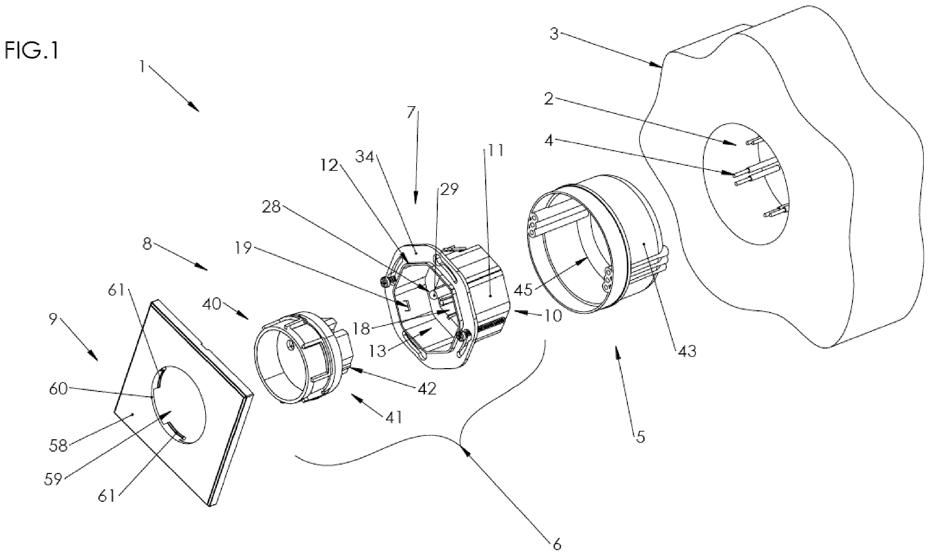

L'on se réfère à la figure 1, représentant un système 1 de connexion électrique représenté en vue éclatée.

Le système **1** de connexion est destiné à être rapporté dans un puits **2** réalisé au sein d'un élément **3** de génie civil, par exemple un mur, une cloison ou une paroi.

L'élément **3** de génie civil est avantageusement réalisé à partir de plaque de plâtre, en panneau cellulaire, en bois, en brique creuse, ou en béton cellulaire.

Dans le mode de réalisation représenté, le puits **2** est cylindrique de révolution formé au sein de l'élément **3.** Un tel puits **2** est par exemple réalisé par l'intermédiaire d'une scie-cloche ou trépan, monté sur un outil de perçage.

Au sein du puits **2** s'étend avantageusement une pluralité de fils **4** électriques, raccordés au réseau électrique général. De tels fils **4** électriques sont destinés à être connectés au système **1** de connexion, de sorte à permettre l'alimentation électrique.

Le réseau électrique général est notamment du type de celui que l'on peut trouver dans des logements ou bureaux, et recommandé par la norme NF C15-100 pour conduire un courant alternatif de fréquence aux alentours de 50 Hz, et une tension d'environ 230 V.

Comme représenté sur la figure 1, le système **1** de connexion comprend une boite **5** d'encastrement, un dispositif **6** de connexion, qui inclut un boitier **7** et un manchon **8,** et un habillage **9.**

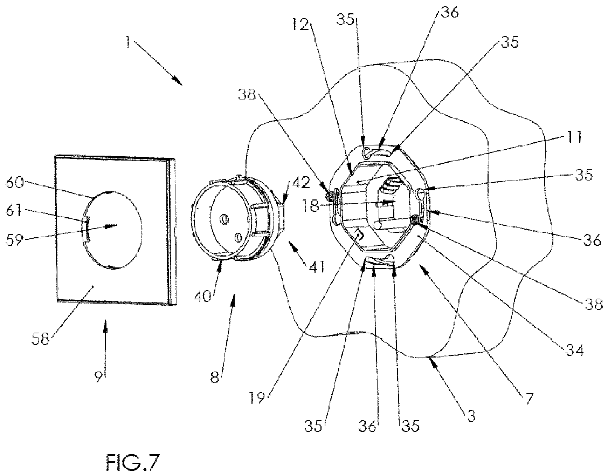

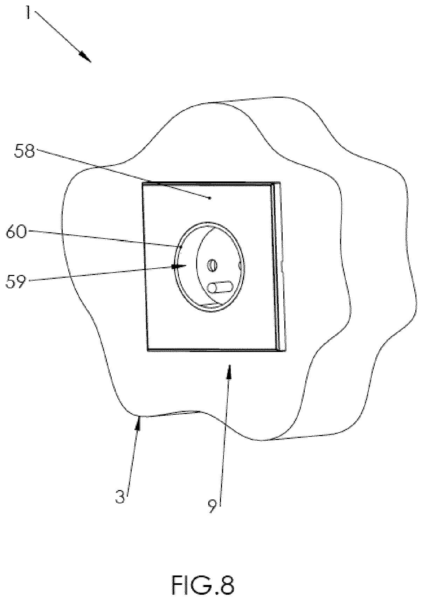

Sur les figures 7 et 8, le système **1** de connexion est représenté monté, c'est-à-dire que la boite **5** d'encastrement, le boitier **7,** le manchon **8** et l'habillage **9** sont solidairement fixés à l'élément **3.**

Le système **1** de connexion peut être en configuration désassemblée, la boite **5** d'encastrement, le boitier **7,** le manchon **8,** et l'habillage **9** étant alors séparés les uns des autres.

Le dispositif **6** de connexion, comprend une fonction prédéfinie, par exemple par l'intermédiaire du manchon **8.**

Une fonction est, par exemple, une fonction de prise électrique, d'interruption de courant, de détection ou de mesures de grandeurs physique, d'émission et réception de courant porteur en ligne ou toute autre fonction gérée par de l'électronique ou de la mécanique.

Le système **1** de connexion, par sa structure en plusieurs éléments qui s'emboitent les uns dans les autres, permet à l'utilisateur de choisir et de mettre en place facilement le dispositif **6** de connexion sans utilisation d'outil.

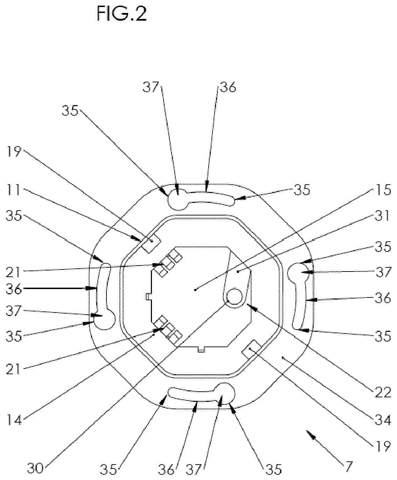

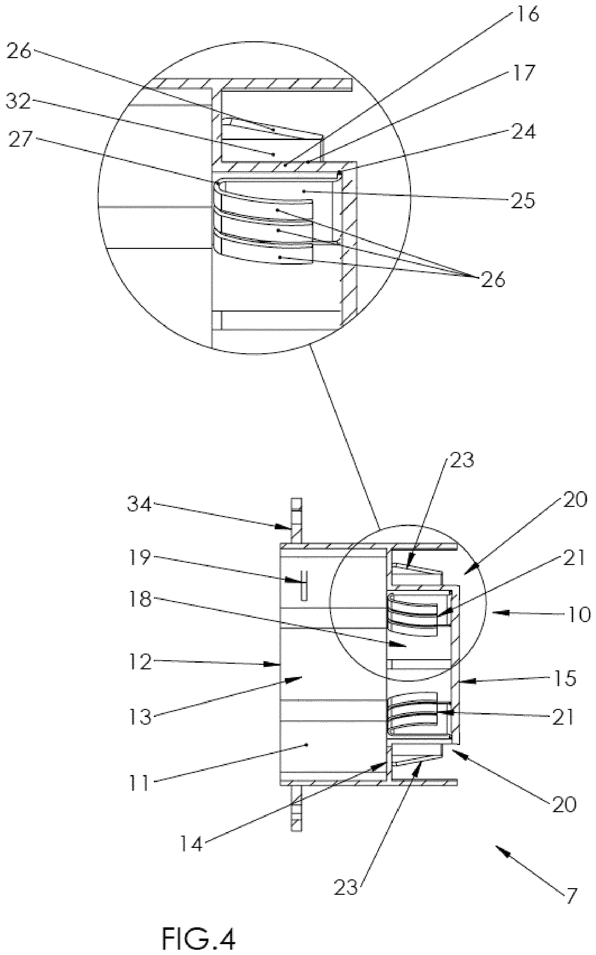

L'on décrit à présent le dispositif **6** de connexion, en se référant plus particulièrement aux figures 2, 3 et 4.

Comme représenté sur les figures, le manchon **8** et le boitier **7** sont destinés à s'enficher, s'emboiter ou s'accoupler l'un dans l'autre, de manière à créer une connexion électrique et mécanique.

Le boitier **7** est destiné à être solidarisé à la boite **5** d'encastrement, et relié à des fils **4** électrique, permettant d'effectuer le raccordement avec le réseau d'alimentation principal.

Dans les modes de réalisation représentés, le boitier **7** comprend un fond **10,** une paroi **11** latérale s'étendant à partir du fond **10,** la paroi **11** latérale définissant une forme cylindrique sensiblement creuse. De cette manière, une ouverture **12** ainsi qu'un espace **13** de réception sont formés, permettant par exemple la réception et le coulissement du manchon **8.**

L'on définit une direction longitudinale, qui correspond à la direction de coulissement du manchon **8** au sein du boitier **7.**

Avantageusement, la paroi **11** latérale définit une forme polygonale, ce qui permet d'empêcher la rotation du manchon **8** lorsqu'il est inséré au sein du boitier **7.** Une telle géométrie permet de faciliter la prise en main, et évite en outre au boitier **7** d'être entraîné en rotation, par exemple pendant le stockage du système **1** de connexion lorsque désassemblé, ou lors du montage du système **1** de connexion. Le montage du système **1** de connexion électrique est ainsi facilité.

Avantageusement, le fond **10** comprend une première paroi **14** de fond et une deuxième paroi **15** de fond. La première paroi **14** de fond présente un décalage selon la direction longitudinale, la distance entre l'ouverture **12** et la première paroi **14** de fond étant inférieure à la distance entre l'ouverture **12** et la deuxième paroi **15** de fond.

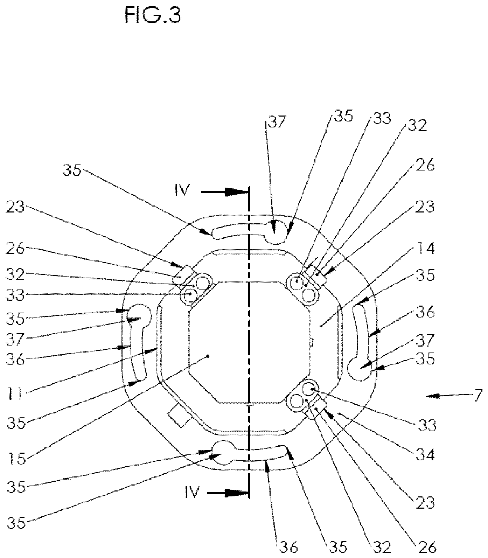

La première paroi **14** de fond et la deuxième paroi **15** de fond s'étendent avantageusement de manière parallèle, suivant deux plans transversaux. Comme il peut être constaté particulièrement sur la figure 3, la projection sur un plan transversal de la première paroi **14** de fond entoure la projection transversale sur la deuxième paroi **15** de fond. De cette façon, de l'espace est libéré, pour permettre aux fils lorsque connectés sur le boitier **7** de se positionner.

Dans le mode de réalisation représenté, le boitier **7** comprend une paroi **16** de côté, avantageusement sensiblement plane, qui effectue une jonction entre la première paroi **14** de fond et la deuxième paroi **15** de fond. L'ensemble des parois **16** de côté forment une face **17** latérale d'un cylindre creux, définissant avantageusement un compartiment **18** au sein de l'espace **13** de réception, permettant de réaliser une connexion mécanique entre le manchon **8** et le boitier **7.**

Le compartiment **18** définit selon un plan transversal une section polygonale, par exemple octogonale. Une telle géométrie permet l'insertion d'un manchon **8** présentant une forme polygonale complémentaire, comme décrit plus loin dans la présente description, et ainsi de réaliser une connexion électrique et mécanique fiable. En outre, une telle forme polygonale permet de former un appui, permettant de faciliter la réalisation d'une connexion entre des fils **4** et le boitier **7,** comme évoqué plus loin dans la description.

Le maintien en position du manchon **8** au sein du boitier **7** est par exemple réalisé par encliquetage. Dans le mode de réalisation représenté, un tel encliquetage est réalisé par l'intermédiaire de languettes **19** déplaçables, qui viennent par exemple entrer en butée sur le manchon **8.** Ainsi, un tel maintien en position s'effectue sans outil et ne nécessite aucun apprentissage particulier à l'utilisateur.

De manière à permettre la réalisation d'une connexion électrique avec des fils **4** électriques, le boitier **7** est doté de moyens **20** de connexion.

Dans le mode de réalisation représenté, les moyens **20** de connexion s'étendent de part et d'autre du boitier **7,** par exemple de part et d'autre de la deuxième paroi **15** de fond. De cette façon, le raccordement du boitier **7** à la boite **5** d'encastrement ne nécessite pas à l'utilisateur de positionner ses doigts au sein de l'espace **13** de réception, ce qui facilite la connexion du dispositif **6** de connexion électrique aux fils **4** électriques. Le temps de montage du système **1** de connexion électrique est ainsi réduit.

Dans le mode de réalisation représenté, le moyen **20** de connexion électrique comprend avantageusement une borne **21, 22** et un connecteur **23** reliés électriquement entre eux, la borne **21, 22** étant la partie du moyen **20** de connexion électrique s'étendant au sein du compartiment **18,** tandis que le connecteur **23** s'étend en dehors du boitier **7.** La borne **21, 22** permet d'effectuer la connexion électrique entre le manchon **8** et le boitier **7.** Par le biais du connecteur **23,** un utilisateur peut relier électriquement un fil **4** électrique au boitier **7.**

Avantageusement, le boitier **7** comprend trois moyens **20** de connexion électrique, de sorte à pouvoir relier trois pôles (phase, neutre, terre), chacun des pôles pouvant être constitué de plusieurs fils **4** pour permettre la réalisation de redondances obligatoires dans la norme.

Avantageusement, les moyens **20** de connexion électriques traversent les parois **16** de côté, par exemple au sein d'une incision **24,** de sorte à permettre le positionnement de bornes **21, 22** contre les parois **16** de côté au sein du compartiment. De cette façon, les bornes **21, 22** prennent appui sur les parois **16** de côté. Les bornes **21, 22,** lorsque utilisées lors de l'insertion du manchon **8** sont ainsi pressées contre une paroi **16** de côté, qui est suffisamment robuste pour éviter toute déformation. Une connexion fiable sans faux-contact est ainsi assurée.

Avantageusement, une première borne **21** comprend au moins une plaquette **25** reliée à une lame **26** par l'intermédiaire d'une pliure **27.** Une telle lame **26** est apte à se déformer et reprendre sa forme originale sous l'action d'un effort visant à rapprocher la lame **26** de la plaquette **25.** De cette façon, une connexion fiable est réalisée entre le boitier **7** et le manchon **8.**

Avantageusement, une deuxième borne **22** comprend un doigt **28** muni d'une première extrémité **29** libre (voir notamment en figure 1), et d'une deuxième extrémité **30** reliée à un appui **31** (voir notamment en figure 2). Un tel appui **31** s'étend avantageusement le long de la deuxième paroi **15** de fond, par exemple au sein d'une saignée (non visible sur les figures), de sorte à permettre un bon maintien en position.

Les connecteurs **23** sont avantageusement disposés en-dehors du boitier **7,** de sorte à permettre de faciliter la connexion entre les fils **4** et les moyens **20** de connexion électriques.

Les connecteurs **23** sont avantageusement disposés de sorte à définir une forme polygonale, par exemple triangulaire. Une telle configuration permet de laisser un espacement suffisant pour manipuler les fils **4,** et évite aux fils **4** de s'entremêler. La réalisation de la connexion électrique entre le boitier **7** et la boite **5** d'encastrement est ainsi accélérée et facilitée. La mise en place du système **1** de connexion électrique est améliorée.

Avantageusement, un connecteur **23** se présente sous la forme d'un bloc **32** creux équipé d'orifices **33** (voir notamment figure 3), muni de mâchoires actionnées par pression sur la lame **26.** Un tel connecteur **23** offre l'avantage de permettre l'insertion d'un fil **4** sans nécessiter d'outil, ce qui facilite le montage du système **1** de connexion.

Dans le mode de réalisation représenté, le bloc **32** creux comprend plusieurs orifices **33,** ce qui permet l'introduction d'une pluralité de fils **4.** Des redondances sont ainsi possibles.

Dans d'autres modes de réalisation, non représentés, le connecteur **23** se présente sous la forme d'une cosse munie d'une vis, le fil étant maintenu par une telle vis sur le connecteur **23.**

De manière à permettre la mise en place du boitier **7** sur la boite **5** d'encastrement, le boitier 7 est doté d'un col **34.**

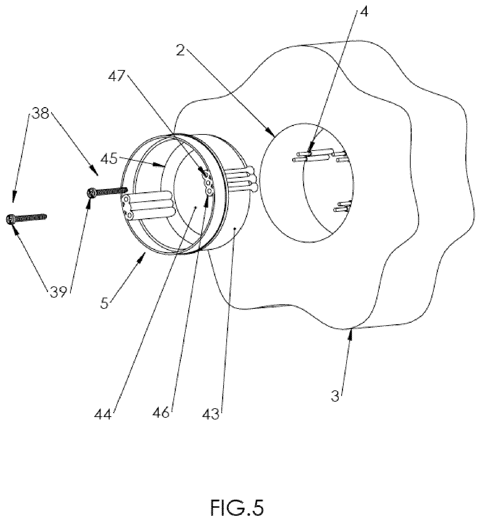

Afin de permettre la mise en place du boitier **7** sur la boite **5** d'encastrement sans outil, le col **34** est muni de rainures **36** ajourées, chacune des rainures **36** définissant une trajectoire sensiblement circulaire, et présentant par exemple des terminaisons **35** en arc-de-cercle, une des terminaisons présentant une perforation **37,** de diamètre supérieur à l'autre terminaison (voir notamment en figures 2, 3, 6 et 7). Une telle perforation **37** permet le passage d'une vis **38** de fixation, la rainure étant de dimension inférieure à la tête **39** de la vis **38** de fixation, ce qui permet de solidariser le boitier **7** à la boite **5** d'encastrement (voir notamment figures 5 et 7).

Le col **34** peut recevoir en sous-face un joint type silicone permettant quand ce dernier est sous pression, par exemple par vissage, de donner une parfaite étanchéité à l'air au système.

L'on décrit à présent le manchon **8.**

Le manchon **8** présente une forme sensiblement cylindrique, et présente une partie **40** fonctionnelle, et une partie **41** de raccordement.

La partie **40** fonctionnelle comprend un ou plusieurs fonctions prédéfinies désirés. Dans le mode de réalisation représenté, la partie **40** fonctionnelle comprend une prise de courant femelle, permettant le branchement d'une fiche mâle.

Dans d'autres modes de réalisation, non représentés, la partie **40** fonctionnelle comprend des moyens de détection et/ou de mesure de grandeurs physiques. Les grandeurs physiques pouvant être détectées et/ou mesurées sont par exemple la concentration de gaz prédéfini, l'hygrométrie, la température, une variation de luminosité.

Dans d'autres modes de réalisation, non représentés, la partie **40** fonctionnelle comprend un émetteur et/ou récepteur de courant porteurs en ligne.

La partie **41** de raccordement présente un bout **42** extrême, destiné à être connecté électriquement et mécaniquement au boitier **7** (voir notamment figure 7).

Dans le mode de réalisation représenté, le bout **42** extrême présente selon un plan transversal un profil sensiblement complémentaire à la section du compartiment **18,** permettant de réaliser une connexion électrique sans faux-contact, et une connexion mécanique sans jeu.

Le bout **42** extrême présente des moyens de contact électriques (non visibles), permettant de permettre la conduction électrique entre le boitier **7** et le manchon **8.** Lorsque le manchon **8** est enfoncé dans le boitier **7,** chacun des moyens de contact (non visibles) est par exemple positionné contre une borne **21, 22** respective.

L'on décrit à présent la boite **5** d'encastrement, en se référant plus particulièrement aux figures 1, 6 et 9.

La boite **5** d'encastrement présente avantageusement une forme sensiblement cylindrique de révolution. La boite **5** d'encastrement est ainsi apte à entrer dans le puits **2** formé dans l'élément **3.**

La boite **5** d'encastrement offre un flanc **43** latéral, et un flanc **44** de fond, de sorte à permettre la formation d'un creux **45** permettant la réception du boitier **7.**

La boite **5** d'encastrement comprend au moins une lumière (non représentée sur les figures), de manière à permettre le passage d'une gaine (non représentée) comprenant une pluralité de fils **4** électrique réseaux. Les fils **4** peuvent ainsi s'étendre au sein du creux **45,** permettant la réalisation d'une connexion électrique entre les fils **4** et le boitier **7.**

La boite **5** d'encastrement est avantageusement munie d'alvéoles **46,** chacune dotée par exemple d'un filetage **47,** permettant la mise en place de la vis **38** de fixation. Une telle disposition sert à maintenir en position le boitier **7** sur la boite **5** d'encastrement, comme décrit plus loin dans la présente description.

La boite **5** d'encastrement est munie de moyens de rattachement permettant le maintien en position de la boite **5** d'encastrement après mise en position au sein du puits **2.**

Selon un premier mode de réalisation, représenté par exemple figure 1, un moyen de rattachement est le scellement de la boite **5** d'encastrement sur l'élément **3.** Dans un tel mode de réalisation, le moyen de rattachement est une pâte durcissant à l'air (non visible sur les figures), telle que du ciment, du mortier ou une colle. Un tel scellement permet d'accroître la résistance à l'arrachement, et ne risque pas de détériorer la forme du puits **2.**

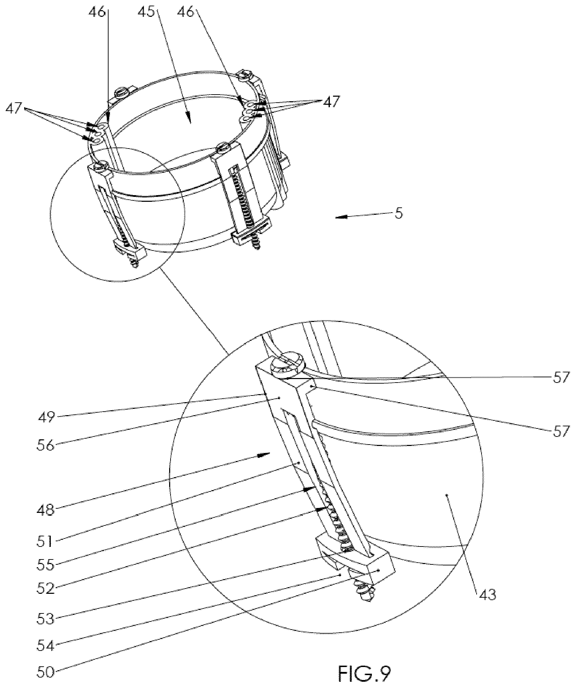

Selon un deuxième mode de réalisation, représenté figure 9, un moyen de rattachement est le maintien en position par serrage de la boite **5** d'encastrement par l'extérieur sur le puits **2.**

Dans un tel mode de réalisation, les moyens de rattachement sont des lamelles **48** disposées sur le flanc **43** latéral. De cette manière, les lamelles **48** entrent en contact du puits **2,** empêchant tout déplacement de la boite **5** d'encastrement.

Dans des mises en oeuvre avantageuses, les lamelles **48** sont déplaçables, ce qui permet de faciliter la mise en place de la boite **5** d'encastrement dans le puits **2.**

Avantageusement, les lamelles **48** sont déplaçables par déformation, de manière à limiter le nombre de pièces, et le coût de fabrication des lamelles **48.** De telles lamelles **48** sont avantageusement réalisées dans une matière thermoplastique, pour des raisons de coût et pour éviter l'utilisation d'un matériau conducteur d'électricité.

Avantageusement, la déformation est obtenue par une action mécanique de compression de la lamelle **48.**

Dans le mode de réalisation représenté, une lamelle **48** comprend une première fraction **49** extrême et une deuxième fraction **50** extrême, toute les deux étant reliées par une fraction **51** centrale.

La première fraction **49** extrême est avantageusement solidaire du flanc **43** latéral, par exemple par soudage, ou par une bague de maintien (non représentée sur les figures) ou par une vis (non représentée sur les figures).

La deuxième fraction **50** extrême est de manière avantageuse laissée libre, ce qui lui permet de se déplacer.

Un moyen de compression, par exemple une vis **52** sans fin, relie la première fraction **49** extrême à la deuxième fraction **50** extrême. De manière à permettre le passage de la vis **52** sans fin, la première fraction **49** extrême et la deuxième fraction **50** extrême sont toutes les deux munies de trous **53.** Ainsi, une rotation de la vis **52** sans fin permet de rapprocher la première fraction **49** extrême à la deuxième fraction **50** extrême, entrainant un fléchissement vers l'extérieur de la fraction **51** centrale de la lamelle **48.**

Avantageusement, le trou **53** de la première fraction **49** extrême est un trou lisse de passage de la vis, tandis que le trou **53** de la deuxième fraction **50** extrême est un trou taraudé. Un tel trou taraudé permet de réaliser une liaison hélicoïdale entre la vis **52** sans fin et la deuxième fraction **50** extrême.

Dans le mode de réalisation représenté, la deuxième fraction **50** extrême comprend un logement **54,** destiné à recevoir un carré (non représenté), adapté au passage de la vis **52** sans fin. Un tel carré est par exemple réalisé dans une matière métallique. De cette façon, le trou **53** de la deuxième fraction **50** extrême n'est pas taraudé, mais est un trou lisse de passage. Une telle caractéristique permet d'éviter la réalisation d'un filet à même la deuxième fraction **50** extrême, mais de réaliser la liaison hélicoïdale entre le carré métallique et la vis **52** sans fin, ce qui accroît la robustesse de la fixation par lamelle **48.** La résistance à l'arrachement du système **1** de connexion électrique est ainsi accrue.

Un tel mode de fixation permet d'accroître la résistance à l'arrachement du boitier, mais permet également de faciliter la mise en place de la boite **5** d'encastrement dans le puits **2,** sans nécessiter d'utiliser de pâte durcissante. De cette façon, le système **1** de connexion électrique se met en place facilement.

Afin de faciliter le passage de la vis **52** sans fin, la fraction **51** centrale est avantageusement dotée d'une fente **55** qui s'étend dans le prolongement des trous **53.** Une telle fente **55** permet de favoriser le fléchissement de la fraction **51** centrale, et limite les efforts s'appliquant sur la première fraction **49** extrême et la deuxième fraction **50** extrême.

Avantageusement, la première fraction **49** extrême présente une base **56** et une frange **57** libre recourbée, par exemple selon un angle droit. Une telle disposition permet de donner un espace de dégagement entre la fraction **51** centrale et la paroi **11** latérale. De cette façon, la flexion de la lamelle est guidée lors du rapprochement de la première fraction **49** extrême et la deuxième fraction **50** extrême, lors de la mise en place de la boite **5** d'encastrement, ce qui facilite le montage du système **1** de connexion électrique.

L'on décrit à présent l'habillage **9,** en se référant notamment à la figure 1.

L'habillage **9** est destiné à se positionner sur le manchon **8.** L'habillage **9** a notamment pour but de rendre le système **1** de fixation esthétique, d'éviter l'accès au manchon **8,** au boitier **7** ou à la boite **5** d'encastrement, et de protéger le système **1** de connexion électrique contre l'intrusion de corps étrangers ou de poussière.

Dans le mode de réalisation représenté, l'habillage **9** comprend par exemple une plaque **58** muni d'un jour **59.** Le jour **59** permet l'accès à la partie **40** fonctionnelle du manchon **8,** en l'occurrence une fonction de prise de courant.

Le jour **59** comprend un rebord **60** muni d'encoches **61** destinées à venir s'enclipser sur des parties réceptrices (non représentées sur les figures) de la partie **40** fonctionnelle. Un tel montage par enclipsage s'effectue sans outil, ce qui facilite la mise en place du système **1** de connexion.

L'on décrit à présent des étapes relatives à un exemple de procédé de montage du système **1** de connexion, en se référant aux figures 5, 6, 7 et 8.

Sur un élément **3** de génie civil incluant un puits **2,** une boite **5** d'encastrement est mise en place: les fils **4** sont positionnés de manière à traverser les ouvertures et à se trouver au sein de la boite **5** d'encastrement. Une telle étape est représentée figure 5.

Dans le cas d'une boite **5** d'encastrement selon le premier mode de réalisation, un moyen de rattachement a été préalablement disposé au sein du puits **2.**

Dans le cas d'une boite **5** d'encastrement selon le deuxième mode de réalisation, le maintien en position de la boite **5** d'encastrement au sein du puits **2** est effectué en tournant les vis **52** sans fin, ce qui permet d'agir en compression sur les lamelles **48.** Les lamelles **48** s'enfoncent au sein d'un bord interne du puits **2,** permettant d'obtenir une résistance à l'arrachement accrue.

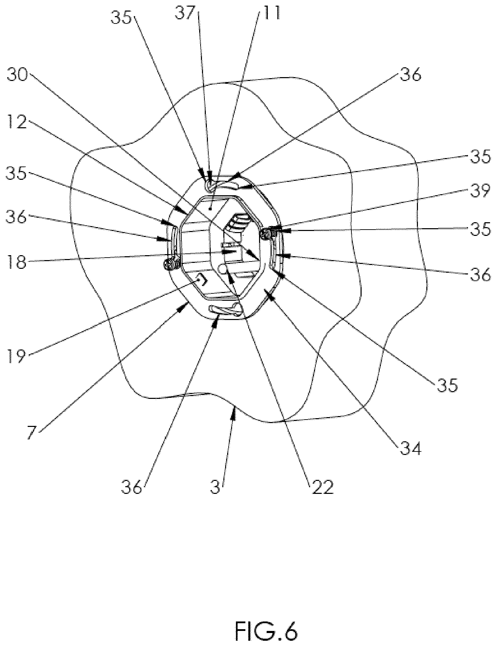

Le boitier **7** est mis en place sur la boite **5** d'encastrement. Les fils **4** sont enfoncés aux connecteurs **23,** de manière à permettre d'établir une connexion électrique. Puis, des vis **38** de fixation sont insérées au sein des filetages. Le boitier **7** est positionné contre la boite **5** d'encastrement, en positionnant les perforations **37** en regard des vis **38** de fixation. Une telle situation est représentée figure 6. De cette façon, la tête **39** de vis passe à travers la perforation **37.** Une rotation du boitier **7** permet à chaque tête **39** de vis de se positionner sur la terminaison **35** exempte de perforation **37.**

Le manchon **8** est inséré en faisant encliqueter les languettes **19** du boitier **7** sur le manchon **8.** Une telle étape est représentée figure 7.

L'habillage **9** vient recouvrir le boitier en se positionnant par enclipsage sur la partie **40** fonctionnelle du manchon **8.** Une telle étape est représentée figure 8.

Le système **1** de connexion tel que présenté offre de nombreux avantages.

Ainsi, le système **1** de connexion se met en place rapidement, sans nécessiter d'outil ni d'apprentissage particulier.

Le système **1** de connexion ne génère pas de faux contact, ne donne pas de sensation de jeu à l'utilisateur.

Le système **1** de connexion offre une résistance maximale à l'arrachement, garantissant une utilisation sécurisée et fiable.

## Revendications

1. Dispositif (**6**) de connexion électrique destiné à être raccordé au réseau électrique par l'intermédiaire d'une boite (**5**) d'encastrement, le dispositif (**6**) de connexion comprenant:
- un boitier (**7**) comprenant un fond (**10**), une face (**17**) latérale, et une ouverture (**12**) définissant ensemble un espace (**13**) de réception, le boitier (**7**) étant muni de moyens (**20**) de connexion électriques,
- un manchon (**8**), apte à être inséré dans l'espace (**13**) de réception, les moyens (**20**) de connexion électrique comprenant chacun un connecteur (**23**) apte à permettre la réalisation d'une connexion au réseau électrique, et une borne (**21, 22**) permettant de réaliser une connexion avec le manchon (**8**), les bornes (**21, 22**) s'étendant au sein de l'espace (**13**) de réception, chacun des connecteurs (**23**) et des bornes (**21, 22**) étant électriquement reliés,
**caractérisé en ce que** les connecteurs (**23**) font saillie du fond (**10**) en s'étendant dans une direction opposée aux bornes (**21, 22**) par rapport au fond (**10**), le fond (**10**) comprenant une première paroi (**14**) de fond et deuxième paroi (**15**) de fond, la première paroi (**14**) de fond et la deuxième paroi (**15**) de fond étant en décalage longitudinal l'une par rapport à l'autre, de sorte que la première paroi (**14**) de fond soit disposée à une distance moins importante de l'ouverture (**12**) que la deuxième paroi (**15**) de fond, les connecteurs (**23**) faisant saillie de la deuxième paroi (**15**) de fond (15) selon une direction radiale perpendiculaire à la direction longitudinale qui correspond à la direction de coulissement du manchon (8) au sein du boitier (7), la deuxième paroi (**15**) de fond étant entourée d'une paroi (**16**) de côté formant la face (17) latérale, de sorte à former un compartiment (**18**), apte à recevoir le manchon (**8**), une borne (**21, 22**) s'étendant au sein du compartiment (**18**), un connecteur (**23**) étant au contact de la paroi (**16**) de côté.

2. Dispositif (**6**) de connexion électrique selon la revendication précédente, **caractérisé en ce que** les connecteurs (**23**) définissent ensemble une forme polygonale.

3. Dispositif (6**)** de connexion électrique selon la revendication précédente, **caractérisé en ce qu'**un connecteur (**23**) comprend un bloc (**32**) muni d'une mâchoire reliée à un moyen de rappel, et une borne (**21, 22**) est dotée d'une plaquette (**25**) munie d'une lame (**26**) déformable.

4. Système (**1**) de connexion électrique comprenant:
- un dispositif (**6**) de connexion électrique selon l'une quelconque des revendications de 1 à 3,
- une boite (**5**) d'encastrement, apte à être fixée sur un élément (**3**) de génie civil par l'intermédiaire d'un moyen de rattachement, la boite (**5**) d'encastrement présentant un creux (**45**),
le système (**1**) de connexion étant **caractérisé en ce que** le dispositif (**6**) de connexion est apte à être inséré et maintenu en position au sein du creux (**45**).

5. Système (**1**) de connexion électrique selon la revendication précédente, **caractérisé en ce qu'**un moyen de rattachement est déformable par compression.

6. Système (**1**) de connexion électrique selon la revendication 4 ou 5, **caractérisé en ce qu'**un moyen de rattachement comprend une lamelle (**48**) déformable, apte à se fléchir par une action de compression exercée par le serrage d'une vis (**52**) sans fin.

7. Système (**1**) de connexion électrique selon la revendication précédente, **caractérisé en ce que** la lamelle (**48**) comprend une première fraction (**49**) extrême et une deuxième fraction (**50**) extrême, toutes les deux étant reliées par une fraction (**51**) centrale, la lamelle (**48**) étant munie d'une fente (**55**), la première fraction (**49**) extrême et la deuxième fraction (**50**) extrême étant solidaires de la boite (**5**) d'encastrement, les fractions (**49, 50**) extrêmes étant chacune munies d'un trou (**53**) permettant le passage de la vis (**52**) sans fin.

8. Système (**1**) de connexion électrique selon l'une quelconque des revendications 4 à 7, **caractérisé en ce que** le boitier (**7**) présente un col (**34**) muni d'une rainure (**36**) d'une hauteur prédéterminée définissant une trajectoire circulaire, une perforation (**37**) de diamètre supérieur à la hauteur de la rainure (**36**), de sorte à permettre le passage d'une vis (**38**) sans fin destinée à s'introduire dans un filetage (**47**) prévu au sein la boite (**5**) d'encastrement.

9. Système (**1**) de connexion électrique selon la revendication 8, **caractérisé en ce que** le col **(34) reçoit** en sous-face un joint type silicone permettant quand ce dernier est sous pression de donner une parfaite étanchéité à l'air au système.

## Patentansprüche

1. Vorrichtung (6) für den Stromanschluss, die zur Verbindung mit dem Stromnetz über eine Unterputzdose (5) verbunden ist, wobei die Anschlussvorrichtung (6) umfasst:
- ein Gehäuse (7), das einen Boden (10), eine Seitenfläche (17) und eine Öffnung (12) umfasst, die gemeinsam einen Aufnahmeraum (13) definieren, wobei das Gehäuse (7) mit elektrischen Anschlussmitteln (20) versehen ist,
- eine Muffe (8), die in den Aufnahmeraum (13) einführbar ist, wobei die elektrischen Anschlussmittel (20) jeweils einen Verbinder (23) umfassen, der imstande ist, die Herstellung eines Anschlusses an das Stromnetz zu ermöglichen, und eine Klemme (21, 22), die die Herstellung eines Anschlusses an die Muffe (8) ermöglicht, wobei sich die Klemmen (21, 22) innerhalb des Aufnahmeraums (13) erstrecken, wobei jeder der Verbinder (23) und jede der Klemmen (21, 22) elektrisch verbunden ist,
**dadurch gekennzeichnet, dass** die Verbinder (23) aus dem Boden (10) hervorragen, indem sie sich in einer Richtung entgegengesetzt zu den Klemmen (21, 22) im Verhältnis zum Boden (10) erstrecken, wobei der Boden (10) eine erste Bodenwand (14) und eine zweite Bodenwand (15) umfasst, wobei die erste Bodenwand (14) und die zweite Bodenwand (15) in Längsverschiebung zueinander stehen, so dass die erste Bodenwand (14) in einem geringeren Abstand zur Öffnung (12) angeordnet ist als die zweite Bodenwand (15), wobei die Verbinder (23) in einer radialen Richtung senkrecht zur Längsrichtung, die der Schieberichtung der Muffe (8) im Gehäuse (7) entspricht, aus der zweiten Bodenwand (15) hervorragen, wobei die zweite Bodenwand (15) von einer Seitenwand (16) umgeben ist, die die Seitenfläche (17) bildet, so dass ein Fach (18) gebildet wird, das imstande ist, die Muffe (8) aufzunehmen, wobei sich eine Klemme (21, 22) im Fach (18) erstreckt, wobei ein Verbinder (23) mit der Seitenwand (16) im Kontakt ist.

2. Vorrichtung (6) für den Stromanschluss nach vorangehendem Anspruch, **dadurch gekennzeichnet, dass** die Verbinder (23) gemeinsam eine polygonale Form definieren.

3. Vorrichtung (6) für den Stromanschluss nach vorangehendem Anspruch, **dadurch gekennzeichnet, dass** ein Verbinder (23) einen Block (32) mit einer Backe umfasst, die mit einem Rückstellmittel verbunden ist, und eine Klemme (21, 22) mit einer Platte (25) versehen ist, die mit einer verformbaren Zunge (26) versehen ist.

4. System (1) für den Stromanschluss, umfassend:
- eine Vorrichtung (6) für den Stromanschluss nach einem der Ansprüche 1 bis 3,
- eine Unterputzdose (5), die über ein Anschlussmittel an einem Bauelement (3) befestigbar ist, wobei die Unterputzdose (5) eine Vertiefung (45) aufweist,
wobei das Anschlusssystem (1) **dadurch gekennzeichnet ist, dass** die Anschlussvorrichtung (6) in der Vertiefung (45) einsetzbar ist und imstande, gehalten zu werden.

5. System (1) für den Stromanschluss nach vorangehendem Anspruch, **dadurch gekennzeichnet, dass** ein Anschlussmittel durch Kompression deformierbar ist.

6. System (1) für den Stromanschluss nach Anspruch 4 oder 5, **dadurch gekennzeichnet, dass** ein Anschlussmittel eine deformierbare Zunge (48) umfasst, die imstande ist, sich durch eine Kompressionswirkung, die durch das Anziehen einer Schnecke (52) ausgeübt wird, zu biegen.

7. System (1) für den Stromanschluss nach vorangehendem Anspruch, **dadurch gekennzeichnet, dass** die Zunge (48) einen extremen ersten Abschnitt (49) und einen extremen zweiten Abschnitt (50) umfasst, wobei beide über einen mittleren Abschnitt (51) verbunden sind, wobei die Zunge (48) mit einem Schlitz (55) versehen ist, wobei der extreme erste Abschnitt (49) und der extreme zweite Abschnitt (50) mit der Unterputzdose (5) fest verbunden sind, wobei die extremen Abschnitte (49, 50) jeweils mit einem Loch (53) versehen sind, welches das Hindurchführen der Schnecke (52) gestatten.

8. System (1) für den Stromanschluss nach einem der Ansprüche 4 bis 7, **dadurch gekennzeichnet, dass** das Gehäuse (7) einen Kragen (34) aufweist, der mit einer Nut (36) mit einer vorbestimmten Höhe versehen ist, die eine kreisförmige Bahn definiert, eine Perforation (37) mit einem Durchmesser, der größer als die Höhe der Nut (36) ist, so dass der Durchgang einer Schnecke (38) gestattet ist, die bestimmt ist, in ein in der Unterputzdose (5) vorgesehenes Gewinde (47) eingeführt zu sein.

9. System (1) für den Stromanschluss nach Anspruch 8, **dadurch gekennzeichnet, dass** der Kragen (34) an der Unterseite eine Silikondichtung empfängt, die ermöglicht, wenn diese unter Druck steht, dem System absolute Luftdichtigkeit zu verleihen.

## Claims

1. Electrical connection device (6) intended to be connected to the electrical network via an embedding box (5), the connection device (6) comprising:
- a housing (7) comprising a bottom (10), a side (17), and an opening (12) defining together a receiving space (13), the housing (7) being provided with electrical connection means (20),
- a sleeve (8), suitable for inserting into the receiving space (13), the electrical connection means (20) each comprising a connector (23) capable of making a connection to the electrical network, and a terminal (21, 22) making a connection with the sleeve (8), the terminals (21, 22) extending within the receiving space (13), each of the connectors (23) and the terminals (21, 22) being electrically connected,
**characterised in that** the connectors (23) protrude from the bottom (10) by extending in a direction opposite to the terminals (21, 22) with respect to the bottom (10), the bottom (10) comprising a first bottom wall (14) and a second bottom wall (15), the first bottom wall (14) and the second bottom wall (15) being longitudinally offset from each other, so that the first bottom wall (14) is arranged at a smaller distance from the opening (12) than the second bottom wall (15), the connectors (23) protruding from the second bottom wall (15) in a radial direction perpendicular to the longitudinal direction corresponding to the sliding direction of the sleeve (8) within the housing (7), the second bottom wall (15) being surrounded by a side wall (16) forming the side (17), so as to form a compartment (18), suitable for receiving the sleeve (8), a terminal (21, 22) extending within the compartment (18), a connector (23) being in contact with the side wall (16).

2. The electrical connection device (6) according to the preceding claim, **characterised in that** the connectors (23) together define a polygonal shape.

3. Electrical connection device (6) according to the preceding claim, **characterised in that** a connector (23) comprises a block (32) having a jaw connected to a return means, and a terminal (21, 22) is provided with a plate (25) provided with a deformable lamella (26).

4. Electrical connection system (1) comprising:
- an electrical connection device (6) according to any one of claims 1 to 3,
- an embedding box (5), suitable to be fastened to a civil engineering element (3) via a means of attaching, the embedding box (5) having a recess (45),
wherein the connection system (1) is **characterised in that** the connection device (6) is capable of being inserted and held in position within the recess (45).

5. Electrical connection system (1) according to the preceding claim, **characterised in that** a means of attaching is deformable by compression.

6. Electrical connection system (1) according to claim 4 or 5, **characterised in that** a means of attaching comprises a deformable lamella (48) capable of flexing by a compressive action exerted by tightening a worm screw (52).

7. Electrical connection system (1) according to the preceding claim, **characterised in that** the lamella (48) comprises a first extreme fraction (49) and a second extreme fraction (50), both being connected by a central fraction (51), the lamella (48) being provided with a slot (55), the first extreme fraction (49) and the second extreme fraction (50) being integral with the embedding box (5), the extreme fractions (49, 50) each being provided with a hole (53) allowing passage of the endless screw (52) .

8. Electrical connection system (1) according to any one of claims 4 to 7, **characterised in that** the housing (7) has a neck (34) provided with a groove (36) of a predetermined height defining a circular trajectory, a perforation (37) of a diameter greater than the height of the groove (36), so as to allow passage of a worm screw (38) intended to be inserted into a thread (47) provided in the embedding box (5).

9. Electrical connection system (1) according to claim 8, **characterised in that** the neck (34) receives on the underside a silicone type seal allowing, when the latter is pressurised, to provide perfect airtightness to the system.
